# EUROPÄISCHE PATENTANMELDUNG

(11) **EP 0 770 320 A1**
(43) Veröffentlichungstag der Anmeldung: **02.05.1997**
(21) Anmeldenummer: 96113276.8
(22) Anmeldetag: 20.08.1996
(51) Int. Cl.: A01B 69/00, G05D 1/02, A01D 41/12, B62D 1/28

(54) **Selbstlenkvorrichtung mit Proportionalventil**

(30) Priorität: 20.10.1995 DE 19539088
(71) Anmelder: CLAAS KGaA, 33428 Harsewinkel (DE)
(72) Erfinder: Diekhans, Norbert, Dr., 33335 Gütersloh (DE)

(57) **Zusammenfassung**

Selbstlenkvorrichtung, insbesondere für eine Landmaschine (1), mit mindestens einer Ortungsvorrichtung (OV), insbesondere einer Erntegutkanten- oder Reihenortungsvorrichtung, deren Ortungssignal(e) (OS) einer Regelvorrichtung (ST) zugeführt ist, die mindestens ein Lenkhydraulikstellsignal (SHL, SHR) an eine elektrisch gesteuerte Lenkhydraulik (LH) mit einem Lenkzylinder (LZ), der mit lenkbaren Rädern (HR) der Landmaschine (1) lenkend verbunden ist, derart abgibt, daß eine jeweilige Ortungssignalabweichung von einem vorgegebenen Ortungskriterium, insbes. einer Getreidekanten-Seitenlage, minimiert wird, indem das elektrische Lenkhydraulikstellsignal (SHL, SHR) eines Regelvorrichtung (ST) jeweils ein Proportionalventil (PVL, PVR) ansteuert, dessen Proportionalventilausgang den Lenkhydraulikzylinder (LZ) speist. Das Proportionalventil (PVL, PVR) ist vorzugsweise jeweils über eine Stromquelle (IQ1, IQ2) und/oder eine Stellwegregelkreis (10, 20) von der übergeordneten Regelvorrichtung (ST) angesteuert.

## Beschreibung

Selbstlenkvorrichtung, insbesondere für eine Landmaschine, mit mindestens einer Ortungsvorrichtung, insbesondere einer Erntegutkanten- oder Reihen-Ortungsvorrichtung, deren Ortungssignal(e) einer Regelvorrichtung zugeführt ist, die mindestens ein Lenkhydraulikstellsignal an eine elektrisch gesteuerte Lenkhydraulik mit einem Lenkzylinder, der mit lenkbaren Rädern der Landmaschine lenkend verbunden ist, derart abgibt, daß eine jeweilige Ortungssignalabweichung von einem vorgegebenen Ortungskriterium, insbes. einer Getreidekanten-Seitenlage, minimiert wird.

Eine derartige Vorrichtung ist aus der DE-A- 21 09 744 bekannt. Bei dieser Vorrichtung werden Ortungssignale unmittelbar auf Steuermittel für die Lenkhydraulik gegeben, so daß nur in sehr grober Weise eine Einhaltung eines vorgegebenen Lenkkriteriums möglich ist.

In der älteren Anmeldung DE-P-195 08 944 ist eine derartige Vorrichtung geoffenbart, die mit einem Fuzzi-Regler pulslängengesteuerte Signale erzeugt, mit denen hydraulische links- und rechtslenkende Schaltventile in schneller Folge betätigt werden und demgemäß abhängig von dem Öffnungsverhältnis jeweils ein Hydraulikölstrom in den Lenkzylinder links- oder rechtslenkend eingespeist wird. Das ständige schnelle Umschalten der Schaltventile führt zu einer beschränkten Standzeit derselben durch Abnutzung der Dichtflächen und Führungen.

Weiterhin sind aus der DE 43 40 283 A1 elektromagnetisch gesteuerte Ventile und Ventilanordnungen bekannt, bei denen abhängig von der Bestromung des Stellmagneten Drucköl mit einem Druck, der zwischen dem eingangsseitigen Speisedruck einer Hydraulikpumpe und dem quasi drucklosen am zweiten Eingang angeschlossenen Rücklauf liegt, am abgehenden Anschluß abgegeben wird. Zur Speisung eines zweiseitig gesteuerten Kolbenantriebes ist eine Anordnung zweier derartiger Steuerventile unter Zwischenschaltung eines zweiseitig hydraulikdruckgesteuerten Rücklaufumsteuerventiles vorgesehen.

Es ist Aufgabe der Erfindung bei hoher Genauigkeit der Lenkung deren Standzeit und Zuverlässigkeit zu erhöhen.

Die Lösung der Aufgabe besteht darin, daß das elektrische Lenkhydraulikstellsignal ein Proportionalventil ansteuert, dessen Proportionalventilausgang den Lenkhydraulikzylinder speist.

Vorteilhafte Ausgestaltungen sind in den Unteransprüchen angegeben.

Es sind verschiedene Ausführungen und Anordnung der Proportionalventile vorteilhaft einsetzbar.

In einer ersten Ausführung weist das Proportionalventil zum Öffnen einen Elektromagneten auf, der gegen eine Rückstellfeder arbeitet. Es eignet sich besonders ein Tauchankermagnet, da dieser eine annähernd proportionale Strom-Wegcharakteristik aufweist die einer Instabilität des Reglers, dessen Teil er ist, verhindert. Das Elektromagnet wird vorteilhaft mit dem Reglersignal durch eine Stromquelle gespeist.

Bei der ersten Ausführung des Proportionalventiles wird die Proportionalität der Ventilöffnung zum Öffnungsweg, der mit einem elektrischen Wegsensor an dem Stellmagneten gemessen wird, über einen untergeordneten Regler hergestellt. Das gemessene Wegsignal wird unmittelbar oder mittelbar über die übergeordnete Regelvorrichtung dem entsprechenden Soll-Wert der Lenkvorgabe gegengekoppelt.

In einer zweiten Ausführung wird das Ventil so ausgebildet, daß der gesteuerte Ölstrom proportional zum Magnetfeld des einstellenden Elektromagneten, also zu dessen eingespeisten Strom ist. Dieser Speisestrom wird über eine mit dem Lenkhydraulikstellsignal gesteuerte Stromquelle erzeugt. Die Stromquelle ist ein dem übergeordneten Regelkreis untergeordenter Stromregler, der die Spannungsschwankungen der Speisespannung und die Widerstandsänderung der Wicklung bei Erwärmung kompensiert. Da die Wicklung eine relativ hohe Induktivität hat, kann der Stromregler auch ein Schaltregler sein, wobei die Wicklung mit einer Freilaufdiode gebrückt wird. Der Schaltregler hat wesentlich geringere Verluste als ein Widerstandsregler.

Bei einer ersten Ventilanordnung ist jeweils ein Proportionalventil für das Lenken nach links und eines für das Lenken nach rechts vorgesehen, und es ist deshalb seitens der Steuervorrichtung dafür gesorgt, daß nur jeweils eines der Ventile aufgesteuert ist. Die beiden Ventile arbeiten auf die beiden Zylinderbereiche des doppeltwirksamen Lenkzylinders. Es ist jeweils ein Zylinderbereich mit der proportional geregelten Druckleitung und der andere mit der Hydraulikölrückleitung verbunden und zwar wechselweise je nach der Lenkrichtung. Die beiden Hydraulikleitungen sind entweder paarweise durch die beiden Proportionalventile geführt, oder die Rückleitung wird über ein Umschaltventil zur einen oder anderen, jeweils nicht mit dem geregelten Druck beaufschlagten, Zylinderseite geschaltet. Die Rückleitungsumschaltung erfolgt in einer weiteren Ausführung durch ein zweiseitig hydraulisch gesteuertes Umschaltventil; dabei sind die Regelventile als 2/1 Ventile, beispielsweise gemäß DE 43 40 238 A1, ausgebildet.

Vorzugsweise findet die Umschaltung mit einem 3-Stellungsventil statt, das eine mittlere Sperrstellung aufweist, in das es zur Sicherheit bei direkter Lenkung federbelastet stromlos eingestellt ist. Die beiden Ansteuermagnete für die Umschaltstellungen sind den Proportionalventilen parallel geschaltet. Diese gesamte Anordnung läßt sich jeweils einschließlich der untergeordneten Regler in gleicher Weise wie die vorbekannten pulspausengesteuerten Ventile, die mit ihren Taktschaltungen verknüpft waren, an die bekannte übergeordnete Regelvorrichtung anschließen.

Bei einer zweiten Anordnung ist nur ein Proportionalventil mit seinem Regler vorgesehen, der als Sollsignal ein Lenkintensitätssignal sowohl für das Links- als auch das Rechtslenken von der übergeordneten Regelvorrichtung bezieht. Dem Proportionalventil ist ein Umsteuerventil nachgeschaltet an das die Zylinderbereiche des doppelwirkenden Lenkzylinders angeschlossen sind. Auch bei dieser Anordnung ist entweder das Proportionalventil für die hydraulische Vor- und Rückleitung parallel ausgebildet oder das Umsteuerventil als 3-Stellungsventil ausgebildet, das stromlos federbelastet gesperrt ist und bei einer Ansteuerung eines seiner Magneten jeweils die eine oder die andere Steuerstellung für die Links- oder Rechtssteuerung einnimmt.

Durch das Hinzunehmen weitere Eingangssignale in die übergeordnete Regelvorrichtung wird die Regelcharakteristik vorteilhaft beeinflußt. Weiterhin ist es vorgesehen, solche Eingangssignale der Regelvorrichtung zuzuführen, welche für die Sicherheit bedeutsam sind, so daß die elektronische Regelvorrichtung dann außer Funktion gesetzt wird, wenn diese entweder durch entsprechende Bedienschalter oder auf Grund einer Fehlermeldung abzuschalten ist. In diesem Sicherheitslenkzustand erfolgt eine unmittelbare Steuerung der Hydraulik vom Lenkrad aus.

Zur Vereinfachung der Anpassung an unterschiedliche Lenkbedingungen, dies kann eine Umrüstung des Fahrzeuges betreffen oder dessen Einsatz in unterschiedlichen Umgebungsbedingungen, ist es vorteilhaft vorgesehen, daß die Regelvorrichtung über Fuzzyfizierungsregeln und zugehörige Parameter gesteuert wird und die erzeugte Lenksteuergröße über Defuzzyfizierungsregeln und entsprechende Parameter in die Lenkhydraulikstellsignale transformiert wird. Hierdurch ist es relativ einfach, über qualitative Angaben die Steuervorgänge quantitativ in bestimmter Weise vorzugeben.

Die Fuzzyfizierungsregeln und Parametern werden ebenso wie die Defuzzyfizierungsregeln und Parameter über eine Eingabevorrichtung entweder unmittelbar in die Regelvorrichtung eingegeben oder über einen Zentralprozessor, welcher mit der Regelvorrichtung kommuniziert, bereitgestellt. Auch können sie in elektrisch programmierbare Speicher, z.B. EPROM oder EEPROM, eingespeichert werden.

Die verschiedenen Eingangssignale werden vorteilhaft jeweils digitalisiert und in der Regelvorrichtung nach ihrer Nullpunktlage und ihrer Bereichsgröße normiert. Hierzu werden die jeweils äußersten Eingangssignale durch entsprechende Auslenkung erzeugt und dabei ein Lernvorgang der Normierungsgröße über die Eingabevorrichtung erregt. Ebenso wird die Mittellage der verschiedenen Sensoren nach deren Einstellung als Nullpunktlage erzeugt und von der Regelvorrichtung gelernt.

Weiterhin hat sich vorteilhaft erwiesen, in der Regelvorrichtung eine statistische Auswertung der Lenksteuergröße vorzunehmen und die Genauigkeit der Lenkung auf Grund der statistischen Parameter zu beurteilen und abhängig davon, eine schrittweise Variation der Fuzzifizierungsparametern vorzunehmen, so daß eine Optimierung der Lenkung sukzessiv erreicht wird.

Als geeignet für die Beurteilung der Lenkgüte haben sich als statistische Größe die Amplitudenstreuung, der Amplitudenspitzenwert und auch der Spitzenwert der Regelzeitkonstante erwiesen. Besonders vorteilhaft ist es, eine Relativierung der Eingangssignale in Bezug auf die Fahrgeschwindigkeit vorzunehmen, so daß die Lenkung bezüglich des zurückgelegten Fahrweges erfolgt und die Auslenkungen in dem einzuhaltenden Sollfahrwegbereich bleibt und weitgehend unabhängig von der Geschwindigkeit ist.

Für die Sicherheitsüberwachung der Regelvorrichtung ist es vorgesehen, daß das periodische Signal des funktionalen Betriebes auf eine externe Vorrichtung gegeben wird, die das periodische Signal gleichrichtet und einem Sicherheitsrelais zuführt, dessen Schaltkontakt in Reihe mit weiteren Sicherheitskontakten den Porportionalsteuerventilen ihre Stromversorgung zuleitet, so daß diese Ventile, wenn sie stromlos sind, federbelastet in den sicheren, geschlossen Zustand versetzt werden.

Die digitale Steuerung ist in einem handelsüblichen 8-Bit-Mikroprozessor leicht zu verwirklichen. Die Ein- und Ausgabedaten und auch die durch Selbstoptimierung erzeugten Parameter werden zweckmäßig in einem Speichermedium abgelegt oder auch für eine spätere Wiederverwendung unter ähnlichen Betriebsbedingungen ausgegeben.

Die Regelvorrichtung kann mit verschiedenartigen Ortungsvorrichtungen zusammenarbeiten deren Ortungssignale in jeweils angepaßter normierter Form auswerten.

Die Ortungsvorrichtung, welche die Getreidekante abtastet, ist vorteilhaft so eingerichtet, daß sie einen Bereich erfaßt, der mehrere Meter vor dem Schneidwerk der Erntemaschine liegt, da diese andererseits an ihren rückwärtsgelegenen Rädern gelenkt wird und deshalb eine Abweichung vom vorgesehenen Fahrweg nur nach einem größeren zurückgelegten Fahrweg ausgeglichen werden kann.

Bei dieser Anordnung hat es sich als günstig erwiesen, das Ist-Signal des Radstellwinkels als Eingangsgröße in die Regelvorrichtung einzuführen, so daß praktisch vorausschauend aus diesem Signal der spätere Weg der Erntemaschine berücksichtigt wird. Hierzu hat es sich als vorteilhaft erwiesen, ein zweidimensionales Kennlinienfeld zu erstellen, dessen Eingangsgrößen das Ortungssignal und das Radstellwinkelsignal sind und dessen Inhalte jeweils die passende Lenksteuergröße bilden. Dieses Kennlinienfeld wird nach und nach in seinen Eintragungen für eine optimale Lenkung optimierend variiert.

Auch die Signale von bekannten mechanisch-elektrischen Reihenabtastern, die an Maiserntern Verwendung finden, lassen sich als Ortungssignale in der Vorrichtung auswerten.

Anhand der Figuren 1 bis 7 sind vorteilhafte Ausgestaltungen dargestellt.
- Fig. 1: zeigt ein Übersichtsbild eines Mähdreschers mit Selbstlenkvorrichtung;
- Fig. 2: zeigt einen Ausschnitt einer alternativen Proportionalventilanordnung zu Fig.1;
- Fig. 3: zeigt einen Bildausschnittt eines Maisernters;
- Fig. 4: zeigt ein Funktionsschaltbild der Fuzzysteuerung;
- Fig. 5: zeigt eine Teilfunktionsdarstellung;
- Fig. 6: zeigt eine Sicherheitsschaltung.
- Fig. 7: zeigt einen Ausschnitt einer alternativen Proportionalventilanordnung zu Fig.1;

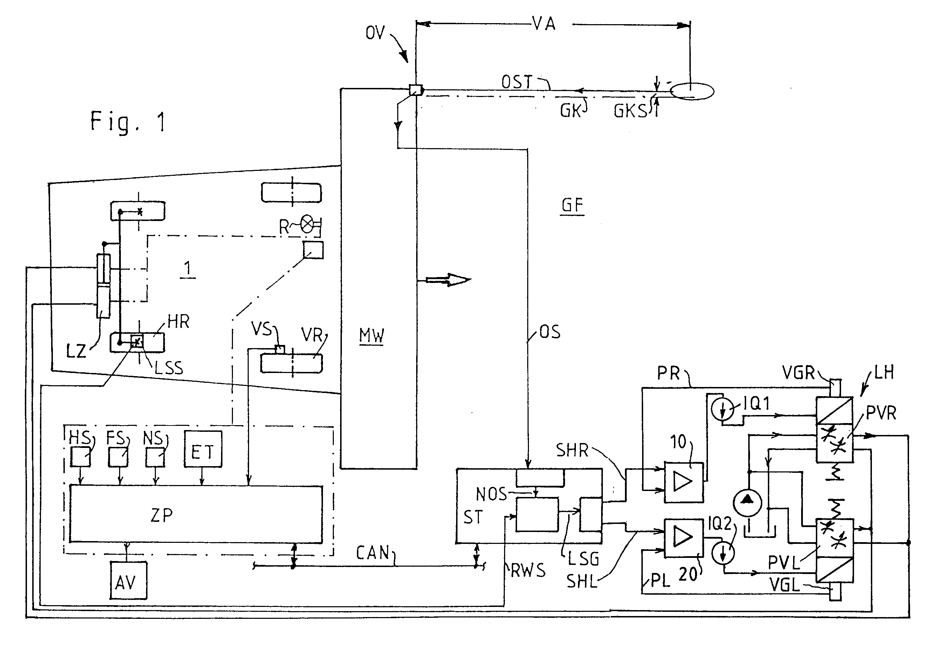

Figur 1 zeigt einen Mähdrescher (1) mit einem Mähwerk (MW), welcher an einer Getreidekante (GK) eines Getreidefeldes (GF) unter Einhaltung einer möglichst geringen Abweichung von einer vorgegebenen Getreidekantenseitenlage (GKS) automatisch gesteuert entlangfahren soll. Oberhalb des Mähwerkes (MW) ist eine Ortungsvorrichtung (OV) angeordnet, deren Ortungsstrahl (OST) auf die Getreidekante (GK) orientiert ist, und deren Ortungssignal (OS) einer Regelvorrichtung (ST) zugeführt ist. Im vorgegebenen Beispiel ist die Regelvorrichtung (ST) über einen genormten Datenbus (CAN) mit einem Zentralprozessor (ZP) verbunden, über den auch die übrigen Steuerprozesse des Mähdreschers überwacht werden. Hierzu sind an dem Zentralprozessor eine Eingabetastatur (ET) und eine Ausgabevorrichtung (AV) vorgesehen. Weiterhin nimmt der Zentralprozessor von den Vorderrändern (VR) ein Geschwindigkeitssignal (VS) auf und von dem Lenkrad (R) Lenkradsignale (LRS). Von der Regelvorrichtung (ST) wird der Lenkhydraulikzylinder (LZ) mittels zweier Proportionalventile eines Linkssteuerventiles (PVL) und eines Rechtssteuerventils (PVR) angesteuert, deren hydraulischen Ausgänge somit die vorhandene Lenkhydraulik beaufschlagen, die den Einschlag der Hinterrädern (HR) bewirkt. An der Lenkvorrichtung wird ein Radstellwinkelsignal (RWS) abgenommen und der Regelvorrichtung zugeführt. Die Lenkstellventile (PVL, PVR) sind federbelastet selbstsicher ausgeführt, so daß sie bei Stromausfall geschlossen sind. In diesem Zustand wird die Lenkung unmittelbar über die bekannte hydraulische Steuerung vom Lenkrad (R) aus vorgenommen. In der Bedienerkabine sind außerdem ein Hand-, ein Fuß- und ein Sicherheitsschalter (HS, FS, NS) angeordnet, deren Signale der Lenkstellventilanordnung aus Sicherheitsgründen zugeführt sind und ebenfalls der Regelvorrichtung (ST) zugänglich gemacht sind.

Es läßt sich erkennen, daß der Vorausabstand (VA) mit dem der Ortungstrahl (OST) die Getreidekante (GK) abtastet, in etwa dem Abstand der Vorderräder (VR) von den Hinterrädern (HR) entspricht. Auf diese Weise ergibt eine Winkelabweichung der Mähdrescherachse zur Getreidekante, die sich in dem Ortungssignal (OS) als Teilkomponente darstellt, ein Äquivalent zu dem Radstellwinkelsignal ist. Diese Winkelkomponente des Ortungssignales überlagert die Komponente der Seitenabweichung der Richtungsachse des Mähdreschers von dem vorgegebenen Sollweg, d.h. die Komponente, die die Getreidekantenseitenlage (GKS) erbringt.

Die Ansteuerung des Lenkzylinders (LZ) ist symmetrisch aufgebaut. Die beiden Zylinderbereiche sind jeweils mit einem der beiden Proportionalventile (PVL, PVR) verbunden.

Diese weisen jeweils einen Ventilstellungsgeber (VGL, VGR) auf, deren Stellwegsignale (PL, PR) jeweils an einen zugehörigen Regler (10, 20) gegenkoppelnd zurückgeführt sind. Diese Regler (10, 20) sind beispielsweise Proportionalverstärker, denen am anderen Eingang jeweils das Links- bzw. Rechtsstellsignal (SHL, SHR) zugeführt ist und deren Ausgang jeweils, vorzugsweise über eine Stromquelle (IQ1, IQ2), mit dem Stellelektromagneten des zugehörigen Proportionalventils (PVL, PVR) verbunden ist. Diese Elektromagnete arbeiten jeweils gegen eine Rückstellfeder. Stromlos sind die beiden Ventile (PVL, PVR) somit geschlossen, und die unmittelbar wirkende Hydraulik des Lenkrades (R) kann in diesem Sicherheitszustand unbeeinflußt auf den Lenkzylinder (LZ) wirken.

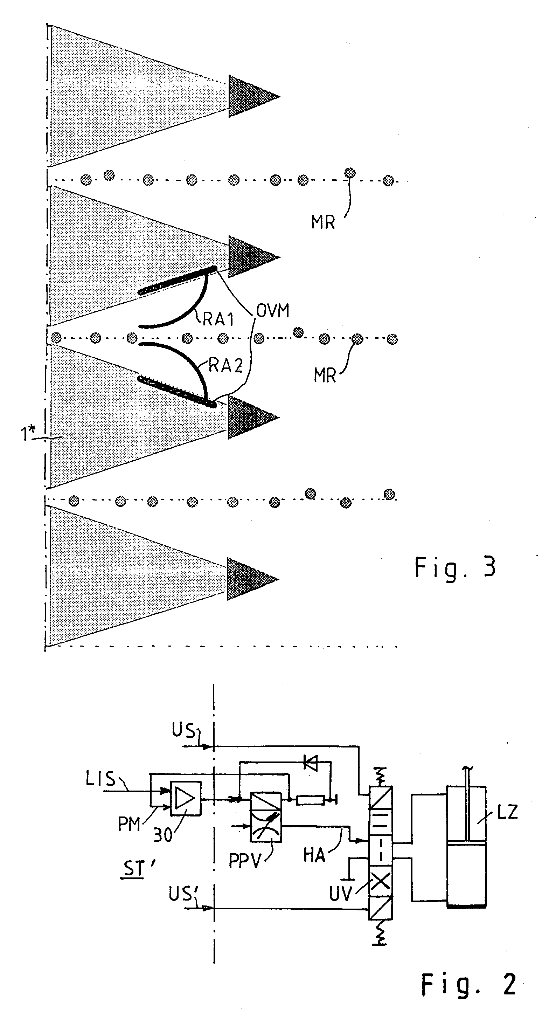

Fig. 2 zeigt eine alternative Hydrauliklenksteuerung. Die übergeordnete Regelvorrichtung (ST') erzeugt zum einen ein Lenkintensitätssignal (LIS) und zum anderen recht-links-Umsteuersignale (US, US'). Das Intensitäts-signal (LIS) beaufschlagt als Sollsignal den untergeordneten Stromregler (30), der ausgangsseitig den rückstellfederbelasteten Stellmagneten des Proportionalventiles (PPV) ansteuert. Der Hydraulikventilausgang (HA) ist parallel zu der Hydraulikrückleitung über ein Dreistellungsumschaltventil (UV) je nach der Ventilstellung rechts- oder linkslenkend diesen ansteuernd mit dem Lenkzylinder (LZ) verbunden. Die sperrende Mittenstellung nimmt das Umschaltventil (UV) durch eine Federrückstellung ein, aus der die Umschaltsignale (US) den Steuerschieber über damit angesteuerte Magnete in die Lenkstellungen verbringen. In der unbestromten Mittenstellung kann die unmittelbare Lenkung am Lenkzylinder (LZ) ungehindert angreifen. Das elektrisch gesteuerte 3-Stellungsventil (UV) ist für Hin- und Rückfluß, also zweikanalig, ausgebildet.

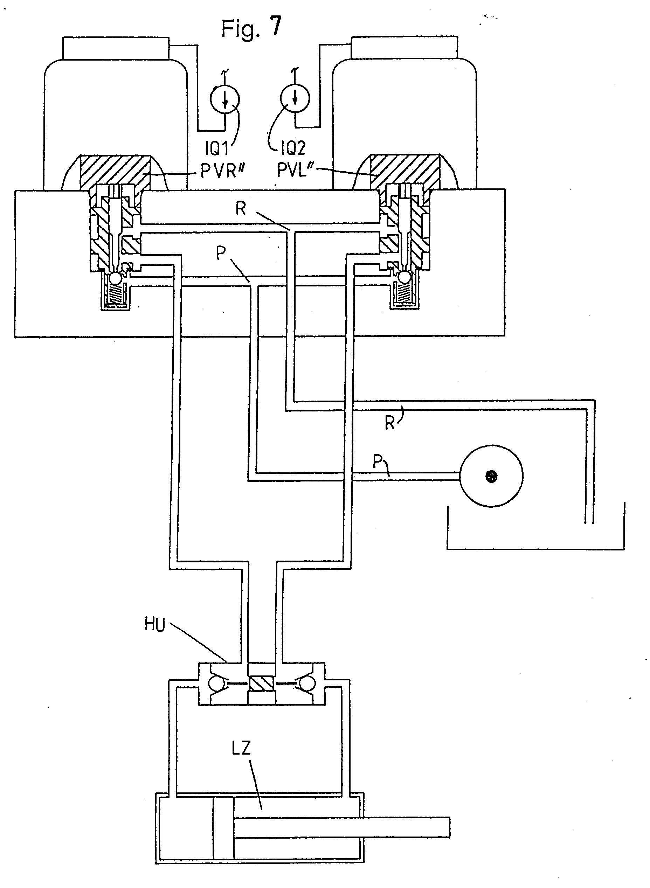

In Figur 7 ist eine weitere alternative Ventilanordnung gezeigt, bei der die beiden Steuerventile (PVL'', PVR'') jeweils einen Hydraulikdruck abgeben, der etwa proportional zum elektrischen Steuerstrom ist und somit in den Grenzen zwischen dem eingangsseitigen Pumpendruck (P) und dem des annähernd drucklosen Rücklaufs (R) liegt. Der Rückfluß aus dem Steuerzylinder (LZ) wird dabei über ein vom jeweiligen Hydraulikdruck gesteuertes Umsteuerventil (HU) freigegeben. Die elektrischen Steuerströme werden vorzugsweise über eine Stromquelle (IQ1, IQ2) gemäß den Steuersignale (SHR, SHL) in die Steuermagnete eingespeist.

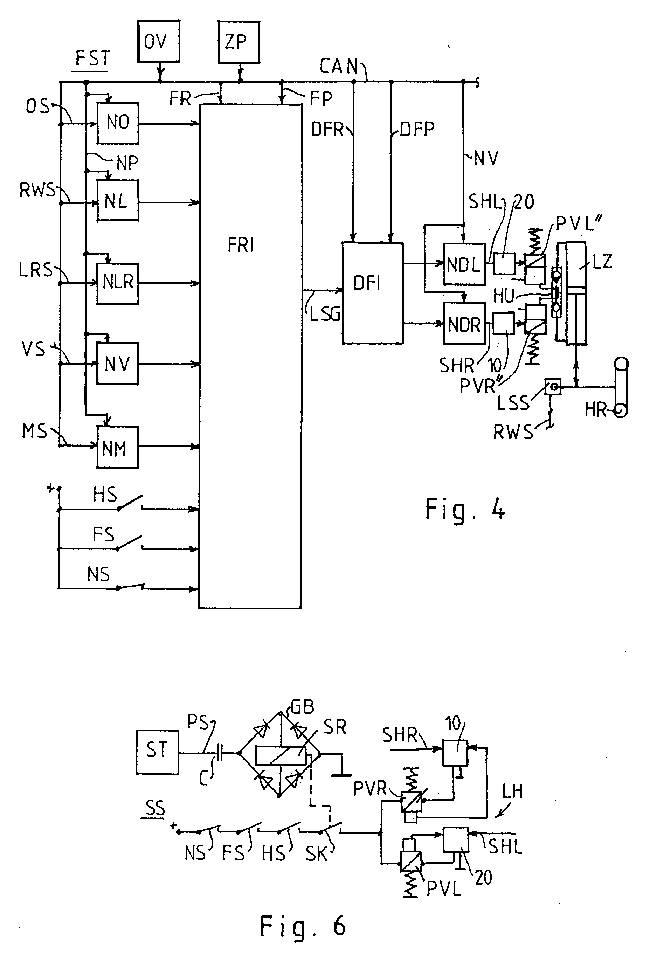

Figur 3 zeigt ein weiteres Beispiel einer Ortungsvorrichtung an dem Erntewerk eines Maisernters (1*). Dort sind in bekannter Weise Fühler (RA1, RA2) an den Schneidwerkträgern so angeordnet, daß deren Enden eine Maisreihe (MR) abtasten und an Sensoren (OVM) jeweils bei unsymmetrischer Auslenkung entsprechende Ortungssignale für eine Rechts- oder Linkskorrektur abgeben.

Figur 4 zeigt ein schematisches Schaltbild der Regelvorrichtung, die insbesondere eine Fuzzyregelvorrichtung (FST) ist. Diese besteht aus einem Fuzzyregelinterpreter (FRI), der aus den Eingangssignalen die Lenksteuergröße (LSG) erzeugt, welche in einem Defuzzyfizierungsinterpreter (DFI) in die eigentlichen Lenksteuersignale (SHL, SHR) umgesetzt wird.

Als Eingangsgröße ist ein Ortungssignal (OS) vorgesehen, welches über einen Ortungsignalnormierer (NO) durch Normierungsparameter (NP) umgesetzt, dem Interpreter (FRI) zugeführt wird. Außerdem wird das Radstellwinkelsignal (RWS) über einen zugehörigen Normierer (NL) dem Interpreter (FRI) zugeführt. Die Fuzzyregeln (FR) und zugehörige Fuzzyparameter (FP) werden von der Eingabevorrichtung über den Datenbus (CAN) in den Interpreter eingegeben und dort abgespeichert. Die aus dem Ortungssignal (OS) und dem Radstellwinkelsignal (RWS) erzeugte Lenksteuergröße (LSG) wird mittels der Defuzzyfizierungsregeln (DFR) und zugehöriger Defuzzyfizierungsparameter (DFP) umgewandelt und in Normierern der Lenkungssteuersignale (NDL, NDR) in Links-Rechts-Steuersignale (SHL, SHR) für die Lenkhydraulik (LH) umgewandelt. Die Lenkhydraulik arbeitet auf die Hinterräder (HR) und wird durch ein proportional arbeitendes Linkssteuerventil (PVL'') und ein gleichartiges Rechtssteuerventil (PVR''), die jeweils elektromagnetisch gesteuert sind, betätigt. Die jeweilige Einstellung der Proportionalventile (PVL'', PVR'') wird vorzugsweise über elektrische Weggeber gemessen und auf einen Vergleicher als Ist-Wert geführt, der andererseits das Links- bzw. Rechts-Steuersignal (SHL, SHR) als Soll-Wert erhält. Die Normierungsvorgaben (NV) und die Defuzzyfizierungsregeln (DFR) und die Defuzzyfizierungsparameter (DFP) werden beispielsweise ebenfalls über den Datenbus (CAN) aus dem Zentralprozessor (ZP) eingespeist und eingespeichert.

In einer weiteren Ausbaustufe werden weitere Eingangssignale nämlich ein Lenkradstellsignal (LRS) über einen zugehörigen Normierer (NLR) weiterhin ein Geschwindigkeitssignal (VS) über einen Normierer (NV) und ein Mittenstellsignal (MS) über einen Normierer (NM) in den Interpeter (FRI) eingegeben. Außerdem werden für die Sicherheitsabfrage Schaltersignale von einem Handschalter (HS) und einem Fußschalter (FS) und einem Notschalter (NS) in den Interpreter (FRI) eingespeist.

Die Normierungsparameter (NP) für die Normierung der Eingangssignale werden ebenfalls zweckmäßig aus dem Datenbus (CAN) übernommen.

Die Ortungsvorrichtung (OV) kann entweder unmittelbar ihr Ortungssignal (OS) in den Normierer (NO) einspeisen oder, wie dargestellt, bereits digitalisiert über den Datenbus (CAN) weiterführen. Die anderen Sensoren welche die Eingangsgrößen erzeugen, liegen im allgemeinen in dem Mähdrescher verteilt und geben ihre Signale über zugehörige Digitalisierer und Rechner weiter. Selbstverständlich können die Normierer jeweils zugehörig unmittelbar dort im Sensorbereich installiert sein.

An den gelenkten Hinterrädern (HR) befindet sich ein Lenkradstellungssensor (LSS), dessen Radwinkelsignal (RWS) in geeigneter Weise als Eingangssignal benutzt wird.

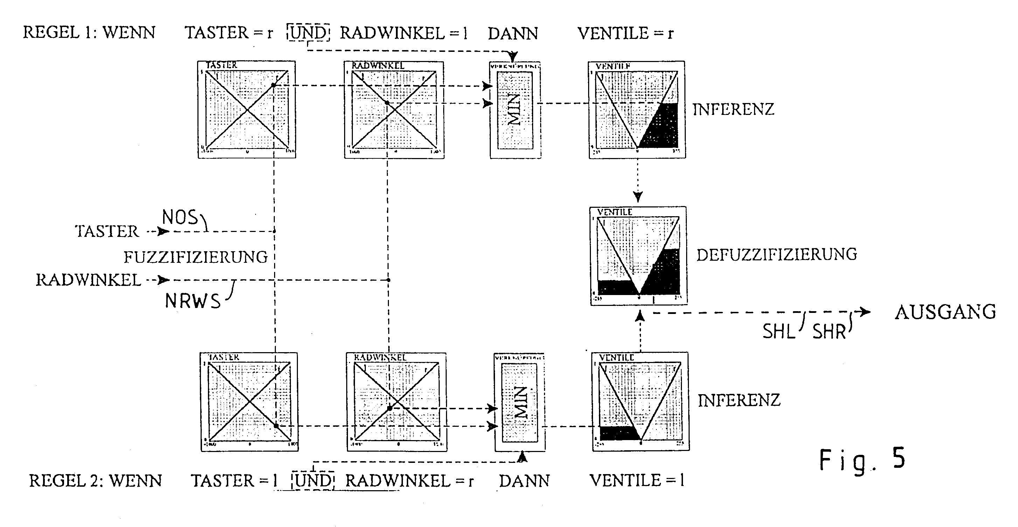

Figur 5 zeigt ein Beispiel der Fuzzyfizierung der normierten Ortungssignale (NOS) und des normierten Radwinkelsignales (NRWS) über jeweils zugeordnete Datenfelder, deren Ausgangsdaten jeweils über eine Fuzzyverknüpfung (MIN) an weitere Datenfelder (INFERENZ) zwecks Defuzzyfizierung geleitet werden, wodurch die Links- und Rechts-Lenkhydraulikstellsignale (SHL, SHR) am Ausgang abgegeben werden.

Figur 6 zeigt eine Sicherheitsschaltung (SS). Die Spannungsversorgung der beiden Lenksteuerventile (PVL, PVR) welche über die Regler (10, 20) angesteuert werden, wird über eine UND-Schaltung, d.h. eine Serienschaltung von sicherheitsrelevanten Kontakten geführt. Hierzu ist ein Ruhekontakt eines Notschalters (NS) ein Arbeitskontakt eines Fußschalters (FS), ein Arbeitskontakt eines Handschalters (HS) und ein Arbeitskontakt (SK) eines Sicherheitsrelais (SR) vorgesehen. Letzteres wird über ein periodisches Betriebssignal (PS) von der Regelvorrichtung (ST) angesteuert, indem es über einen Trennkondensator (C) auf eine Gleichrichterbrücke (GB) gegeben wird und somit gleichgerichtet das Sicherheitsrelais (SR) beaufschlagt. Wenn die Regelvorrichtung (ST) nicht mehr periodisch arbeitet oder aufgrund der Auswertung von Steuerkriterien eine automatische Lenkung nicht mehr vorgenommen werden soll, wird das Sicherheitsrelais (SR) nicht mehr bestromt und so die Stromversorgung der hydraulischen Lenkventile (PVL, PVR) abgeschaltet, so daß diese durch Federkraft geschlossen werden. Die Ausgestaltung der Regelvorrichtung (ST), die das periodische Betriebssignal erzeugt und die Schaltschwelle des Sicherheitsrelais (RS) sind so ausgebildet, daß auch bei Ausfall eines Bauteiles incl. des Kondensators (C) oder eines Brückengleichrichters das Relais (RS) abfällt und so die Sicherheitsschaltung die Abschaltung der Automatik bewirkt. In entsprechender Weise ist die Siecherheitsschaltung auf die Schaltungsanordnung nach Fig. 2 anzuwenden, wobei dort das Proportionalventil und das Umschaltventil über die Kontaktkette der Sicherheitskontakte ihre Stromversorgung erhalten.

Es hat sich gezeigt, daß bei herkömmlichen Mähdreschern etwa 60% der Aufmerksamkeit des Fahrers für das Lenken der Maschine beansprucht wurde. Die Lenktätigkeit ist deshalb besonders anstrengend, da das Lenken mit den Hinterrändern eine relativ lange Vorhaltezeit benötigt, bis eine seitliche Lageänderung des Mähdreschers zur Getreidekante auftritt, und danach muß durch ein entsprechendes Gegensteuern wieder die Geradeausfahrt herbeiführt werden. Das automatische Lenken ermöglicht bei praktisch völliger diesbezüglicher Entlastung des Fahrers dadurch im allgemeinen ein schnelleres Fahren und eine annähernd vollständige Auslastung der Schneidwerksbreite bis auf einen Sicherheitsrestabstand von 10 bis 20 cm.

Der Aufbau der übergeordneten Regelvorrichtung mittels eines digitalen Rechners ermöglicht die völlige Integration des Lenksystems in die übrige digitale Steuerung des Mähdreschers. Durch einfache Parametrisierung und durch eine Bedienung von der zentralen Bedienungskonsole der Erntemaschine werden die jeweils notwendigen Regeln und Parameter dem Prozessor vorgegeben; die Regelvorrichtung selbst ist in ihrer Grundstruktur völlig neutral. Auch die unterschiedlichsten Ortungssysteme lassen sich durch einfache Parametrisierung und Normierung der Signale anschließen, und es ist keine spezielle hardwaremäßige Auslegung der Regelvorrichtung hierfür erforderlich. Durch die Verwendung der Fuzzylogik lassen sich leicht weitere vorhandene Zusatzinformationen in die Steuerung einbringen, soweit diese für eine weitere Optimierung des Regelvorganges nützlich erscheinen. Durch die automatische Optimierung erhalten diese weiteren Informationen jeweils die ihnen zukommende Relevanz.

## Patentansprüche

1. Selbstlenkvorrichtung, insbesondere für eine Landmaschine (1), mit mindestens einer Ortungsvorrichtung (OV), insbesondere einer Erntegutkanten- oder Reihenortungsvorrichtung, deren Ortungssignal(e) (OS) einer Regelvorrichtung (ST, ST') zugeführt ist, die mindestens ein Lenkhydraulikstellsignal (SHL, SHR) an eine elektrisch gesteuerte Lenkhydraulik (LH) mit einem Lenkzylinder (LZ), der mit lenkbaren Rädern (HR) der Landmaschine (1) lenkend verbunden ist, derart abgibt, daß eine jeweilige Ortungssignalabweichung von einem vorgegebenen Ortungskriterium, insbes. einer Getreidekanten-Seitenlage, minimiert wird,
dadurch gekennzeichnet, daß das elektrische Lenkhydraulikstellsignal (SHL, SHR) ein Proportionalventil (PVL, PVR; PVL'', PVR''; PPV) ansteuert, dessen Proportionalventil-ausgang (HA) den Lenkhydraulikzylinder (LZ) speist.

2. Selbstlenkvorrichtung nach Anspruch 1, dadurch gekennzeichnet, daß für ein Lenken nach links und für ein Lenken nach rechts die Regelvorrichtung (ST) je ein getrenntes Lenkhydraulikstellsignal (SHL, SHR) erzeugt, und diese Signale (SHL, SHR) jeweils einem zugehörigen untergeordneten Regler (10, 20) als dessen Soll-Wert zugeführt sind, dessen Ausgang jeweils einen Stellelektromagneten eines zugehörigen rückstellfederbelasteten Proportionalventiles (PVL, PVR; PVL'', PVR'') ansteuert, Von dem jeweils ein Stellwegsignal (PL, PR) auf den zugehörigen Regler (10, 20) als Ist-Wert rückgekoppelt ist.

3. Selbstlenkvorrichtung nach Anspruch 2, dadurch gekennzeichnet, daß je eine Hydraulikölzuleitung und eine Hydraulikölrückleitung paarweise durch die Proportionalventile (PVL, PVR, PVL'', PVR'') weg- und/oder stromproportional gesteuert hindurchgeführt sind und ausgangsseitig wechselweise miteinander verbunden mit den Anschlüssen des Lenkzylinders (LZ) links- bzw. rechtslenkend verbunden sind oder die Hydraulikölzuleitungen über hydraulisch gesteuerte Umschaltventile (HU) geführt sind, die die Rückflußwege jeweils gesteuert freigeben.

4. Selbstlenkvorrichtung nach Anspruch 1, dadurch gekennzeichnet, daß daß die Regelvorrichtung (ST') ein Lenkintensitätssignal (LIS) einem untergeordneten Regler (30) als Soll-Wert zuführt und dessen Ausgangssignal den Stellelektromagneten des Proportionalventiles (PPV) strom- und/oder wegproportional ansteuert, dessen proportional gesteuerter hydraulischer Ausgang (HA) über ein Umschaltventil (UV, UV') an die Anschlüsse des Lenkzylinders (LZ) abhängig von dessen jeweiliger Schaltstellung links- bzw. rechtslenkend verbunden ist und die Regelvorrichtung (ST) das Umsteuerventil (UV, UV') mit einem links- bzw. rechts-Lenksignal (US, US') ansteuert.

5. Selbstlenkvorrichtung nach der Ansprüche 2 bis 4, dadurch gekennzeichnet, daß jeweils der Stellelektromagnet des Proportionalventils (PVR, PVL; PVL'', PVR''; PPL) über eine vom zugehörigen Regler (10, 20) oder dem Lenkintensitätssignal (LIS) gesteuerte Stromquelle (IQ1, IQ2, 30), die vorzugsweise ein Schaltregler ist, stromgeregelt speist.

6. Selbstlenkvorrichtung nach einem der vorstehenden Ansprüche, dadurch gekennzeichnet, daß die übergeordnete Regelvorrichtung (ST) das Ortungssignal (OS) periodisch digitalisiert und über eine digitalfunktionale Verknüpfung der Ortungssignalabweichung von dem Ortungskriterium die elektrischen Lenkhydraulikstellsignale (SHL, SHR; LIS, US, US') erzeugt.

7. Selbstlenkvorrichtung nach Anspruch 6, dadurch gekennzeichnet, daß der Regelvorrichtung (ST) als weitere Eingangssignale ein Radstellwinkelsignal (RWS) von den lenkbaren Rädern (HR) und/oder ein Geschwindigkeitssignal (VS) eines Geschwindigkeitssensors und/oder ein Lenkradstellungssignal (LRS) eines Lenkrades (R) und/oder ein Mittenstellersignal (MS) sowie Schaltersignale (HS, NS, FS) eines Handbetriebsschalters und/oder eines Notschalters und/oder eines Fußbetriebsschalters zugeführt sind und diese Eingangssignale unmittelbar oder gruppenweise zusammengefaßt einem vorzugsweise zweidimensionalen Kenndatenfeld periodisch adressierend zugeführt sind, dessen Kenndaten die Regelvorrichtung unmittelbar oder transformiert als die Lenkhydraulikstellsignale (SHL, SHR; LIS, US, US') abgibt.

8. Selbstlenkvorrichtung nach Anspruch 6 oder 7, dadurch gekennzeichnet, daß die Regelvorrichtung (ST) das periodische Ortungssignal (OS) mittels Fuzzyfizierungsregeln gemäß Fuzzyfizierungsparametern (FP) in eine Lenksteuergröße (LSG) transformiert und diese nach Defuzzyfizierungsregeln gemäß Defuzzyfizierungsparametern (DFP) in das/die Lenkhydraulikstellsignale (SHL; SHR; LIS, US, US') transformiert.

9. Selbstlenkvorrichtung nach Anspruch 7 oder 8, dadurch gekennzeichnet, daß wenn mindestens eines der Schaltersignale (HS, NS, FS) eine AUS-Stellung oder Not-Stellung signalisiert, nur das Lenkradstellungssignal (LRS) und nicht das Ortungssignal (OS) einen Beitrag zur Lenksteuergröße (LSG) erbringt.

10. Selbstlenkvorrichtung nach Anspruch 8 oder 9, dadurch gekennzeichnet, daß die Fuzzyfizierungsregeln und -parameter (FP) und/oder die Defuzzyfizierungsregeln und - parameter (DFP) von einer Eingabevorrichtung (ET) in die Regelvorrichtung (ST) eingeladen und dort gespeichert werden oder in einem elektrisch ladbaren Programmspeicher, einem EPROM oder EEPROM, abgespeichert sind.

11. Selbstlenkvorrichtung nach einem der Ansprüche 6 bis 10, dadurch gekennzeichnet, daß die periodisch von der Regelvorrichtung (ST) aufgenommenen Eingangssignale (OS, LRS, RWS) über mehrere der Perioden in der Regelvorrichtung (ST) zwischengespeichert werden und zusätzlich einen Beitrag zur Lenksteuergröße (LSG), ggf. durch die Fuzzyfizierung, erbringen.

12. Selbstlenkvorrichtung nach einem der Ansprüche 6 bis 10, dadurch gekennzeichnet, daß die Eingangssignale (OS, LRS, RWS) jeweils in Eingangsgrößen umgewandelt und in der Regelvorrichtung (ST) nach ihrer Nullpunktlage und ihrer Bereichsgröße normiert werden, wozu jeweils Normierungsparameter (NP) der Regelvorrichtung (ST) über die Eingabevorrichtung (ET) zugeführt werden oder bei jeweils vorgegebenen Abweichungen vom Ortungskriterium und in ihrer Nullpunktlage durch eine Bedieneranweisung von der Regelvorrichtung (ST) übernommen werden.

13. Selbstlenkvorrichtung nach einem der Ansprüche 6 bis 11, dadurch gekennzeichnet, daß die Transformation oder Defuzzyfizierung der Lenksteuergröße (LSG) in ein Linksstellsignal (SHL), das ein zugeordnetes Linkssteuerventil (LV) beaufschlagt, und ein Rechtsstellsignal (SHR), das ein Rechtssteuerventil (RV) beaufschlagt, erfolgt, von denen die Lenkhydraulik (LH) links- bzw. rechtslenkend beaufschlagt ist.

14. Selbstlenkvorrichtung nach Anspruch 12, dadurch gekennzeichnet, daß das Linksstellsignal (SHL) und das Rechtsstellsignal (SHR) in der Regelvorrichtung (ST) jeweils in einem Bereich nahe deren Nullpunkten einander in einem Überdeckungsbereich (UB) überschneidend normiert sind.

15. Selbstlenkvorrichtung nach Anspruch 13 oder 14, dadurch gekennzeichnet, daß in der Regelvorrichtung (ST) das Linksstellsignal (SHL) und das Rechtsstellsignal (SHR) dann, wenn das Ortungssignal (OS) einen Beitrag zur Lenksteuergröße (LSG) erbringt, auf vorgegebene Grenzwerte (GW1, GW2) normiert sind, die jeweils unterhalb von Stellsignalen für die jeweils maximal möglichen Lenkwinkel liegen.

16. Selbstlenkvorrichtung nach Anspruch 14 oder 15, dadurch gekennzeichnet, daß die Regelvorrichtung (ST) die Normierungsvorgaben über die Eingabevorrichtung (ET) erhält.

17. Selbstlenkvorrichtung nach einem der Ansprüche 6 bis 16, dadurch gekennzeichnet, daß die Regelvorrichtung (ST) die Lenksteuergröße (LSG) bezüglich ihrer Amplituden und/oder Regelzeiten über eine Anzahl der Perioden statistisch auswertet und abhängig von einer so gewonnenen statistischen Größe die Normierungs- und/oder Fuzzyfizierungsparameter (NP, FP) schrittweise variiert und abhängig von einer Änderung der folgend ermittelten statistischen Größe zur jeweils vorhergehend ausgewerteten statistischen Größe die Normierungs- und/oder Fuzzyfizierungsparameter (NP, FP) jeweils weiter derart schrittweise variiert, daß eine Verringerung der jeweils betrachteten statistischen Größe zu erwarten ist.

18. Selbstlenkvorrichtung nach Anspruch 17, dadurch gekennzeichnet, daß die statistische Größe die Amplitudenstreuung und/oder der Amplituden-Spitzenwert und/oder der Regelzeitkonstanten-Spitzenwert ist/sind.

19. Selbstlenkvorrichtung nach Anspruch 17 oder 18, dadurch gekennzeichnet, daß die periodischen Signalauswertungen mittels des Geschwindigkeitssignales (VS) auf einen Fahrwegabschnitt normiert erfolgen und die zu verringernde statistische Größe der Amplitudenspitzenwert relativ zum zugehörigen Fahrwegabschnitt ist.

20. Selbstlenkvorrichtung nach einem der Ansprüche 7 bis 19, dadurch gekennzeichnet, daß die Ortungssignalabweichung von dem vorgegebenen Vergleichswert und das Radstellwinkelsignal (RWS) jeweils adressierend dem zweidimensionalen Kenndatenfeld zugeführt sind, das die Lenksteuergrößen (LSG) dadurch ausgibt.
